# EUROPÄISCHE PATENTSCHRIFT

(11) **EP 4 057 529 B1**
(45) Veröffentlichungstag und Bekanntmachung des Hinweises auf die Patenterteilung: **17.07.2024**
(21) Anmeldenummer: 22157549.1
(22) Anmeldetag: 18.02.2022
(51) Int. Cl.: H04H 40/18, H02G 3/12

(54) **ANORDNUNG MIT EINEM RADIO FÜR DIE UNTERPUTZMONTAGE**
ARRANGEMENT WITH A RADIO FOR FLUSH MOUNTING
AGENCEMENT DOTÉ D'UNE RADIO POUR LE MONTAGE ENCASTRÉ

(30) Priorität: 09.03.2021 DE 102021105682
(43) Veröffentlichungstag der Anmeldung: 14.09.2022
(73) Patentinhaber: ABB SCHWEIZ AG, 5400 Baden (CH)
(72) Erfinder: Uhlmann, Markus, 59269 Beckum (DE); Ewers, Manfred, 58239 Schwerte (DE); Szkudlarek, Thomas, 45665 Recklinghausen (DE); Behan, Dominik, 58579 Schalksmühle (DE); Schoeffel, Robin, 58509 Lüdenscheid (DE); Gelbach, Bjoern, 57319 Bad Berleburg (DE)
(74) Vertreter: Wesch, Arno

(56) Entgegenhaltungen:
- CN-U- 202 374 435
- DE-A1- 102011 000 448
- DE-A1- 102012 008 459
- DE-U1- 202014 100 679
- COMMERCIAL AUDIO: "40 Watt Wall Mount Music Amplifier User's Manual", 23 July 2019 (2019-07-23), XP055724045, Retrieved from the Internet <URL:https://downloads.monoprice.com/files/manuals/36374_Manual_190723.pdf> [retrieved on 20200820]

## Beschreibung

Die Erfindung betrifft eine Anordnung nach dem Oberbegriff des Anspruchs 1.

Eine solche Anordnung zeigt die DE 20 2014 100 679 U1. Die DE 10 2012 008 459 A1 zeigt ein Unterputz-Elektro-Baukastensystem mit einem Touchscreenflächenfeld zur Aktivierung einer hinterlegten Gerätefunktion. Die DE 10 2011 000 448 A1 zeigt ein Installationsgerät mit einer mehrpoligen Schnittstelle nach Art eines Steckverbinders. Aus der "Commercial Audio 40 Watt Wall Mount Music Amplifier"- Betriebsanleitung (XP055724045) ist eine Tafel bekannt, auf der zwei AUX-Anschlüsse, nämlich ein AUX IN- und ein AUX OUT-Anschluss vorgesehen sind. Aus der CN 202 374 435 U ist es im Hinblick auf ein Autoradio bekannt, eine AUX-Schnittstelle gleichzeitig sowohl als Sprachsignal-Eingangsanschluss als auch als Sprachsignal-Ausgangsanschluss zu verwenden.

Es ist bereits bekannt, Radios in Gebäuden unter Putz anzuordnen. Ein solches Radio für die Unterputzmontage wird häufig in zwei Unterputzdosen untergebracht, wobei üblicherweise in einer Unterputzdose ein elektronischer Anschlussblock und die Antenne angeordnet werden und in der anderen Unterputzdose ein Lautsprecher angeordnet wird.

Radios für die Unterputzmontage, die sich aktuell im Markt befinden, weisen entweder einen AUX-Eingang oder einen AUX-Ausgang auf, welcher der Signalverbindung zu weiteren Geräten dient.

Ein AUX-Eingang kann verwendet werden, um mittels eines Radios für die Unterputzmontage ein Audiosignal einer externen Quelle wiederzugeben und zu verstärken. Die externe Quelle kann beispielsweise als Smartphone ausgestaltet sein, welches über einen Klinkenausgang an das Radio für die Unterputzmontage angeschlossen ist.

Ein AUX-Ausgang kann verwendet werden, um einen externen Verstärker an ein Radio für die Unterputzmontage anzuschließen. Hierdurch können Lautsprecher mit einer höheren Leistung als der internen Verstärkerleistung des Radios angeschlossen werden.

Aus Platzgründen ist es mechanisch nicht einfach möglich, beide AUX-Anschlüsse, nämlich AUX-Eingang und AUX-Ausgang, an einem Unterputzeinsatz als Klemmen oder Steckanschlüsse zur Verfügung zu stellen. Bisher wurde daher ein AUX-Anschluss nur für eine der vorgenannten Verwendungsmöglichkeiten genutzt.

Der Erfindung liegt daher die Aufgabe zugrunde, eine Möglichkeit zu schaffen, um einen, durch den Endanwender auswählbaren, AUX-Eingang oder AUX-Ausgang zu realisieren, ohne die üblichen mechanischen Komponenten und Anschlussklemmen zu verändern.

Erfindungsgemäß wird die voranstehende Aufgabe durch eine Anordnung mit den Merkmalen des Anspruchs 1 gelöst. Danach ist die eingangs genannte Anordnung gekennzeichnet durch eine Benutzeroberfläche, mittels welcher der AUX-Anschluss als AUX-Eingang oder AUX-Ausgang konfigurierbar oder einstellbar ist.

Erfindungsgemäß ist erkannt worden, dass die vorgenannten Anforderungen an ein Radio für die Unterputzmontage erfüllt werden können, indem die Funktion bzw. die Funktionsweise nur eines einzigen AUX-Anschlusses in einer Firmware oder Software über eine Benutzeroberfläche verändert werden kann. So kann der Benutzer die von ihm bevorzugte Funktion des einzigen AUX-Anschlusses auswählen. Der Benutzer kann auswählen, ob der einzige AUX-Anschluss als AUX-Eingang oder als AUX-Ausgang fungieren soll. Der Benutzer erhält hierdurch mehr Funktionalität bei gleichbleibenden, üblichen Abmessungen ohne zusätzliche oder erweiterte Hardware, nämlich insbesondere ohne übliche mechanische Komponenten und Anschlussklemmen am Unterputzeinsatz zu verändern. So können bereits bekannte Unterputzeinsätze für Radios für die Unterputzmontage weiterverwendet werden.

Die Benutzeroberfläche umfasst vorteilhaft einen Bildschirm oder ein Display. So können unterschiedliche Menüs auf der Benutzeroberfläche optisch dargestellt werden. Der Bildschirm oder das Display sind bevorzugt beleuchtet. Die Benutzeroberfläche ist insoweit nicht als zweidimensionale Oberfläche oder als bloße Software, sondern vielmehr als konstruktiv körperliche Einrichtung zu verstehen, welche einen Bildschirm umfasst, aber auch noch weitere Komponenten umfassen kann.

Weiter vorteilhaft weist die Benutzeroberfläche einen Bildschirm mit veränderbaren Symbolen und einen Bedienrahmen mit permanenten Symbolen auf, der den Bildschirm zumindest abschnittsweise oder vollständig umgibt, wobei durch Druck auf den Bedienrahmen oder durch Berührung des Bedienrahmens oder durch Berühren des Bildschirms Funktionen ansteuerbar sind, welche durch die veränderbaren Symbole dargestellt sind. So kann der Benutzer durch die permanenten Symbole darüber informiert werden, welche Funktionen mittelbar über den Bedienrahmen oder unmittelbar über den Bildschirm ansteuerbar sind.

Weiter vorteilhaft umfasst die Benutzeroberfläche einen Touchscreen mit nur optisch, jedoch nicht haptisch wahrnehmbaren Symbolen. So kann eine Benutzeroberfläche möglichst glatt und eben ausgestaltet sein. Die Reinigung der Benutzeroberfläche wird vereinfacht. Bevorzugt ist kein Bedienrahmen vorgesehen oder falls doch, ein Bedienrahmen ohne permanente Symbole, welche eine Menüführung anzeigen.

Vorteilhaft sind im Bildschirm unterschiedliche Menüs darstellbar, welche optisch wahrnehmbare Symbole in unterschiedlicher Kombination zeigen. So kann zum Beispiel neben einer Lautstärkeregelung auch eine Senderanzeige vorgesehen sein, damit der Benutzer weiß, welchen Radiosender er gerade hört.

Die hier beschriebene Anordnung umfasst vorteilhaft weiter mindestens einen Unterputzeinsatz mit Signalklemmen, der in einer Unterputzdose aufgenommen ist. Der Unterputzeinsatz ist in der Wand eines Gebäudes oder eines Raumes versenkt und schließt bevorzugt im Wesentlichen bündig mit der Wand ab, wobei die Benutzeroberfläche als Aufsatzmodul den Unterputzeinsatz bedeckt und für einen Benutzer an der Wand zur Bedienung leicht zugänglich ist. Ein solches Aufsatzmodul kann farblich ausgestaltet sein und ist üblicherweise aus Kunststoff gefertigt. Das Modul kann jedoch auch aus Metall gefertigt sein.

Ein AUX-Anschluss der hier beschriebenen Art ist bevorzugt ein analoger Nebenanschluss, Zusatzanschluss oder Hilfsanschluss für Audiosignale, insbesondere für Stereoaudiosignale. Ein AUX-Anschluss kann mit einem weiteren Gerät durch Verwendung von Cinchbuchsen, Klinkenbuchsen aber auch durch DIN- oder Tuchelstecker erfolgen. Ein AUX-Eingang ist üblicherweise ein Hochpegeleingang, der Spannungen von 150 mV bis 770 mV aufnimmt.

Die hier beschriebene Anordnung ist nicht busbasiert.

In der Zeichnung zeigen
- Fig 1: eine Darstellung der Signalklemmen eines bekannten Radios für die Unterputzmontage,
- Fig 2: Anwendungsbeispiele für ein bekanntes Radio für die Unterputzmontage,
- Fig. 3: eine Darstellung der Signalklemmen an einem Radio für die Unterputzmontage, welches in der hier beschriebenen Anordnung verwendet wird,
- Fig. 4: eine beispielhafte Darstellung einer Menüauswahl, anhand einer Benutzeroberfläche der hier beschriebenen Anordnung,
- Fig. 5: ein Ausführungsbeispiel einer Anordnung mit einem Radio für die Unterputzmontage, bei welcher der AUX-Anschluss als AUX-Eingang konfiguriert ist, und
- Fig. 6: ein Ausführungsbeispiel einer Anordnung mit einem Radio für die Unterputzmontage, bei welcher der AUX-Anschluss als AUX-Ausgang konfiguriert ist.

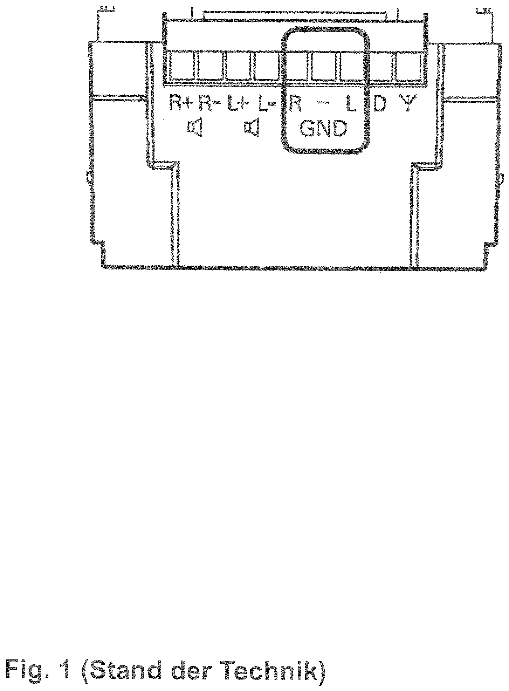

Fig. 1 zeigt eine Darstellung der Signalklemmen eines Radios für die Unterputzmontage des Stands der Technik.

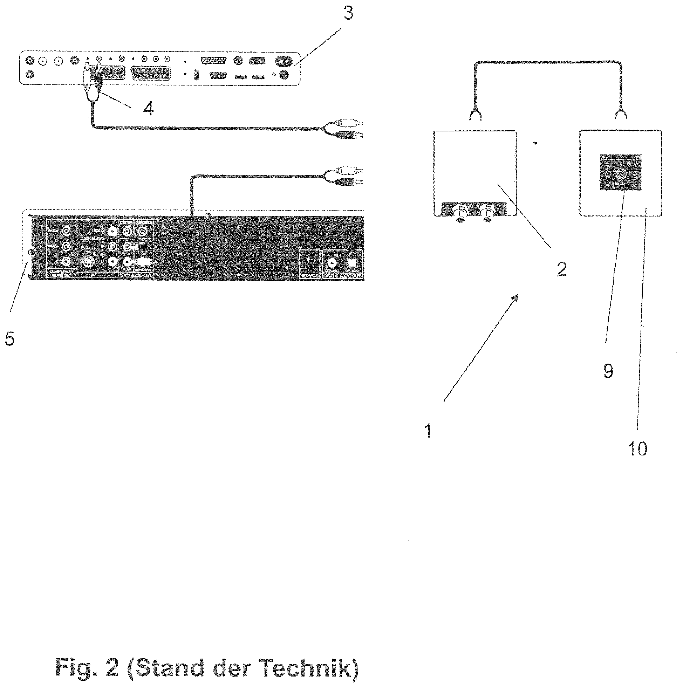

Fig 2 zeigt bereits bekannte Anwendungsbeispiele für ein Radio 1 für die Unterputzmontage. Gezeigt ist in Fig. 2 eine Anordnung, umfassend ein Radio 1 für die Unterputzmontage, wobei dem Radio 1 ein AUX-Anschluss 2 zur Verbindung mit einem weiteren Gerät zugeordnet ist.

Der AUX-Anschluss 2 kann verwendet werden, um mittels des Radios 1 ein Audiosignal einer externen Quelle wiederzugeben und zu verstärken. Die externe Quelle kann beispielsweise als TV-Gerät 3 ausgestaltet sein, welches über einen Audiosignalausgang 4 verfügt. Der AUX-Anschluss 2 kann auch verwendet werden, um einen externen Verstärker 5 an das Radio 1 anzuschließen.

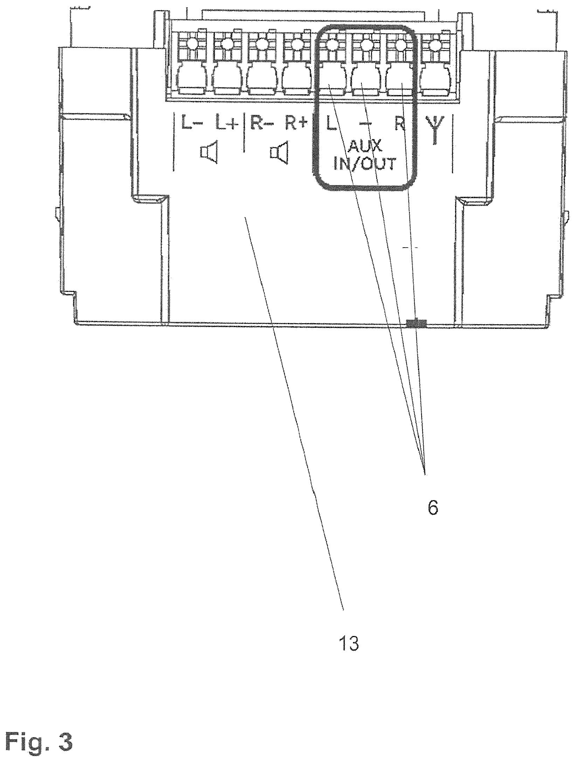

Fig. 3 zeigt eine Darstellung der Signalklemmen 6 an einem Radio 1 für die Unterputzmontage, welches in einer Anordnung der hier beschriebenen Art verwendet wird. Es ist insoweit ein Unterputzeinsatz 13 mit Signalklemmen 6 vorgesehen, der in einer Steckdosenöffnung oder Unterputzdose aufgenommen ist. Der Unterputzeinsatz 13 ist insoweit Teil des Radios 1 für die Unterputzmontage. Der Unterputzeinsatz 13 weist nur einen AUX-Anschluss 2 auf.

Die hier beschriebene Anordnung umfasst das Radio 1 für die Unterputzmontage, wobei dem Radio 1 nur ein AUX-Anschluss 2 zur Verbindung mit einem weiteren Gerät zugeordnet ist. Die hier beschriebene Anordnung ist durch eine Benutzeroberfläche 7 gekennzeichnet, mittels welcher der AUX-Anschluss 2 als AUX-Eingang oder AUX-Ausgang konfigurierbar oder einstellbar ist.

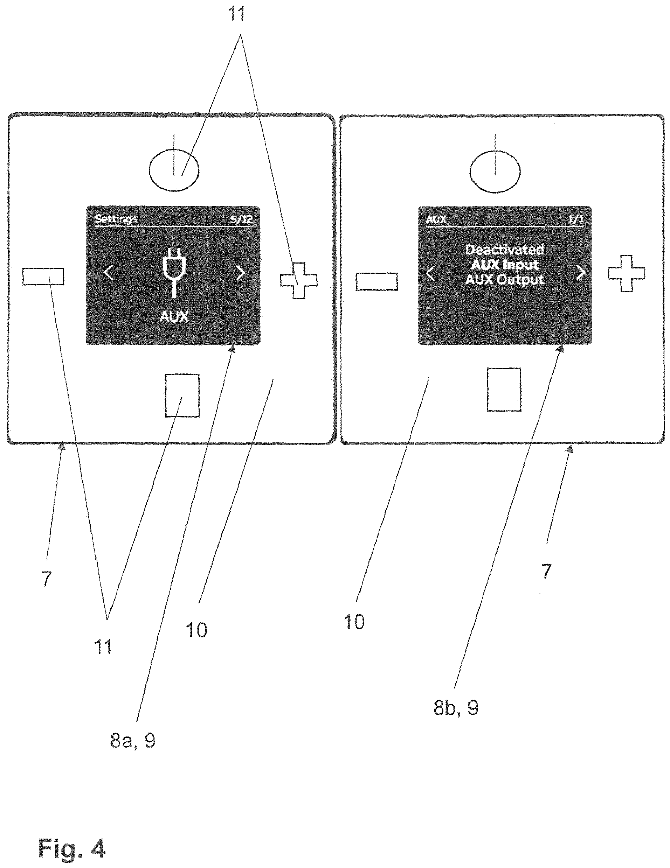

Fig. 4 zeigt anhand einer Benutzeroberfläche 7, die mit zwei unterschiedlichen Menüs 8a, 8b links und rechts in Fig. 4 dargestellt ist, eine beispielhafte Darstellung einer Menüauswahl. Die Benutzeroberfläche 7 umfasst einen Bildschirm 9, in welchem die Menüs 8a, 8b darstellbar sind.

Die Benutzeroberfläche 7 gemäß Fig. 4 weist einen Bildschirm 9 mit menübedingt veränderbaren Symbolen und einen Bedienrahmen 10 mit permanenten Symbolen 11 auf, der den Bildschirm 9 vollständig umgibt.

Durch Berührung des Bedienrahmens 10 oder durch Berühren des Bildschirms 9 sind Funktionen ansteuerbar, welche durch die veränderbaren Symbole in den Menüs 8a, 8b dargestellt sind.

Selbstverständlich ist denkbar, dass die Benutzeroberfläche 7 einen Touchscreen mit nur optisch, jedoch nicht haptisch wahrnehmbaren Symbolen umfasst.

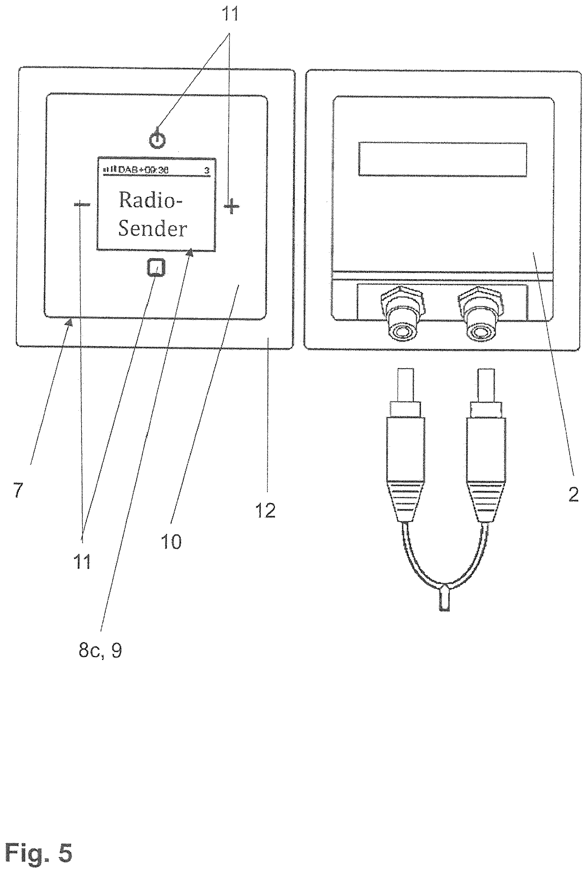

Fig. 5 zeigt links, dass im Bildschirm 9 unterschiedliche Menüs 8a, 8b, 8c darstellbar sind, welche optisch wahrnehmbare Symbole in unterschiedlicher Kombination zeigen. Konkret ist links in Fig. 5 durch ein Menü 8c der Radiosender angezeigt, der ausgewählt wurde.

Fig. 5 zeigt anhand der Darstellung rechts in Fig. 5 weiter konkret ein Ausführungsbeispiel der Anordnung, bei dem der AUX-Anschluss 2 als AUX-Eingang konfiguriert ist.

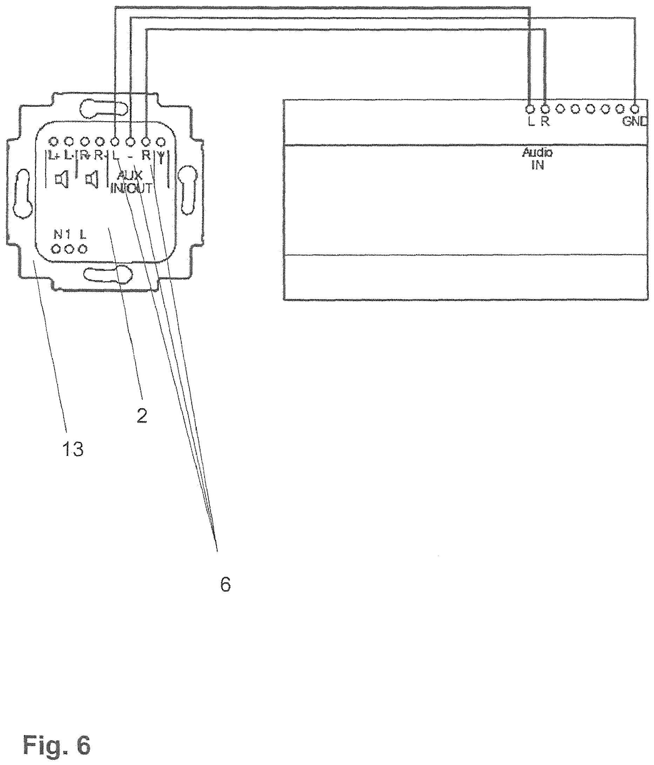

Fig. 6 zeigt ein Ausführungsbeispiel der Anordnung mit einem Radio 1 für die Unterputzmontage, bei welchem der AUX-Anschluss 2 als AUX-Ausgang konfiguriert ist.

### Bezugszeichenliste

| | |
|---|---|
| 1 | Radio für die Unterputzmontage |
| 2 | AUX-Anschluss |
| 3 | TV-Gerät |
| 4 | Audiosignalausgang von 3 |
| 5 | Verstärker |
| 6 | Signalklemmen von 1 |
| 7 | Benutzeroberfläche von 1 |
| 8a, b, c | Menü |
| 9 | Bildschirm |
| 10 | Bedienrahmen |
| 11 | Permanente Symbole auf 10 |
| 12 | Blendrahmen |
| 13 | Unterputzeinsatz |

## Patentansprüche

1. Anordnung, umfassend ein Radio (1) für die Unterputzmontage, wobei dem Radio (1) ein AUX-Anschluss (2) zur Verbindung mit einem weiteren Gerät zugeordnet ist, und eine Benutzeroberfläche (7), wobei das Radio (1) nur einen einzigen AUX-Anschluss (2) aufweist, **dadurch gekennzeichnet, dass** mit der Benutzeroberfläche (7) der AUX-Anschluss (2) als AUX-Eingang oder AUX-Ausgang konfigurierbar oder einstellbar ist, indem die Funktion des AUX-Anschlusses (2) in einer Firmware oder Software über die Benutzeroberfläche (7) veränderbar ist.

2. Anordnung nach Anspruch 1, **dadurch gekennzeichnet, dass** die Benutzeroberfläche (7) einen Bildschirm (9) oder ein Display umfasst.

3. Anordnung nach Anspruch 2, **dadurch gekennzeichnet, dass** die Benutzeroberfläche (7) einen Bildschirm (9) mit veränderbaren Symbolen und einen Bedienrahmen (10) mit permanenten Symbolen (11) aufweist, der den Bildschirm (9) zumindest abschnittsweise oder vollständig umgibt, wobei durch Druck auf den Bedienrahmen (10) oder durch Berührung des Bedienrahmens (10) oder durch Berühren des Bildschirms (9) Funktionen ansteuerbar sind, welche durch die veränderbaren Symbole dargestellt sind.

4. Anordnung nach Anspruch 2 oder 3, **dadurch gekennzeichnet, dass** die Benutzeroberfläche (7) einen Touchscreen mit nur optisch, jedoch nicht haptisch wahrnehmbaren Symbolen umfasst.

5. Anordnung nach einem der Ansprüche 2 bis 4, **dadurch gekennzeichnet, dass** im Bildschirm (9) unterschiedliche Menüs (8a, 8b, 8c) darstellbar sind, welche optisch wahrnehmbare Symbole in unterschiedlicher Kombination zeigen.

6. Anordnung nach einem der voranstehenden Ansprüche, **dadurch gekennzeichnet, dass** mindestens ein Unterputzeinsatz (13) mit Signalklemmen (6) vorgesehen ist, der in einer Unterputzdose aufgenommen ist.

## Claims

1. Arrangement, comprising a radio (1) for flush mounting, the radio (1) being assigned an AUX connection (2) for connecting to a further device, and a user interface (7), the radio (1) having only a single AUX connection (2), **characterized in that**, by means of the user interface (7), the AUX connection (2) is configurable or settable as AUX input or AUX output by virtue of the function of the AUX connection (2) being variable in firmware or software by way of the user interface (7).

2. Arrangement according to Claim 1, **characterized in that** the user interface (7) comprises a screen (9) or a display.

3. Arrangement according to Claim 2, **characterized in that** the user interface (7) has a screen (9) with variable symbols and an operating frame (10) with permanent symbols (11), which surrounds the screen (9) at least in sections or completely, wherein functions represented by the variable symbols are controllable by pressing on the operating frame (10) or by touching the operating frame (10) or by touching the screen (9).

4. Arrangement according to Claim 2 or 3, **characterized in that** the user interface (7) comprises a touchscreen with only optically but not haptically perceptible symbols.

5. Arrangement according to any of Claims 2 to 4, **characterized in that** different menus (8a, 8b, 8c) showing optically perceptible symbols in different combinations are representable on the screen (9).

6. Arrangement according to any of the preceding claims, **characterized in that** at least one flush-mounting insert (13) with signal terminals (6) is provided, which is accommodated in a flush-mounting box.

## Revendications

1. Arrangement, comprenant une radio (1) pour le montage encastré, une borne AUX (2) destinée à la connexion à un appareil supplémentaire étant associée à la radio (1), et une interface utilisateur (7), la radio (1) ne possédant qu'une seule et unique borne AUX (2), **caractérisé en ce que** la borne AUX (2) peut être configurée ou réglée avec l'interface utilisateur (7) comme une entrée AUX ou une sortie AUX du fait que la fonction de la borne AUX (2) peut être modifiée dans un micrologiciel ou un logiciel par le biais de l'interface utilisateur (7).

2. Arrangement selon la revendication 1, **caractérisé en ce que** l'interface utilisateur (7) comporte un écran (9) ou un afficheur.

3. Arrangement selon la revendication 2, **caractérisé en ce que** l'interface utilisateur (7) possède un écran (9) avec des symboles modifiables et un cadre de commande (10) avec des symboles permanents (11), qui entoure l'écran (9) au moins par portions ou entièrement, des fonctions pouvant être commandées en appuyant sur le cadre de commande (10) ou en touchant le cadre de commande (10) ou en touchant l'écran (9), lesquelles sont représentées par les symboles modifiables.

4. Arrangement selon la revendication 2 ou 3, **caractérisé en ce que** l'interface utilisateur (7) comporte un écran tactile avec des symboles perceptibles uniquement de manière visuelle, mais pas de manière haptique.

5. Arrangement selon l'une des revendications 2 à 4, **caractérisé en ce que** différents menus (8a, 8b, 8c) peuvent être représentés sur l'écran (9), lesquels présentent des symboles perceptibles visuellement dans différentes combinaisons.

6. Arrangement selon l'une des revendications précédentes, **caractérisé en ce qu'**au moins un insert encastré (13) pourvu de bornes de signaux (6) est présent, lequel est logé dans une boîte à encastrer.
